# FASCICULE DE BREVET EUROPEEN

(11) **EP 3 166 233 B1**
(45) Date de publication et mention de la délivrance du brevet: **01.08.2018**
(21) Numéro de dépôt: 16195997.8
(22) Date de dépôt: 27.10.2016
(51) Int. Cl.: H04B 7/185, H04Q 11/00

(54) **DISPOSITIF PHOTONIQUE DE BRASSAGE ET DE CONVERSION FREQUENTIELLE DE SIGNAUX A RADIOFREQUENCE ET CHARGE UTILE DE TELECOMMUNICATIONS SPATIOPORTEE COMPRENANT UN TEL DISPOSITIF**
PHOTONISCHE VORRICHTUNG ZUR NETZWERKBILDUNG UND FREQUENZUMWANDLUNG VON FUNKSIGNALEN, UND NUTZLAST DER ÜBER DEN RAUM ÜBERTRAGENEN TELEKOMMUNIKATION, DIE EINE SOLCHE VORRICHTUNG UMFASST
PHOTONIC DEVICE FOR CROSS-CONNECTION AND FREQUENCY CONVERSION OF RADIO FREQUENCY SIGNALS AND SPACEBORNE TELECOMMUNICATIONS PAYLOAD COMPRISING SUCH A DEVICE

(30) Priorité: 06.11.2015 FR 1502343
(43) Date de publication de la demande: 10.05.2017
(73) Titulaire: Thales, 92400 Courbevoie (FR)
(72) Inventeur: AVELINE, Muriel, 31100 TOULOUSE (FR); BENAZET, Benoit, 31100 TOULOUSE (FR); SOTOM, Michel, 31100 TOULOUSE (FR)
(74) Mandataire: Priori, Enrico

(56) Documents cités:
- EP-A2- 0 871 343
- FR-A1- 2 864 385
- SHIEH W ET AL: "MICROWAVE SIGNAL MIXING BY USING A FIBER-BASED OPTOELECTRONIC OSCILLATOR FOR WAVELENGTH-DIVISION MULTIPLEXED SYSTEMS", CONFERENCE ON OPTICAL FIBER COMMUNICATIONS. DALLAS, FEB. 16 - 21, 1997; [CONFERENCE ON OPTICAL FIBER COMMUNICATIONS], NEW YORK, IEEE, US, 16 février 1997 (1997-02-16), page 358/359, XP009006333, ISBN: 978-0-7803-3860-9

## Description

L'invention porte sur un dispositif de brassage et de conversion fréquentielle de signaux à radiofréquence, ainsi que sur une charge utile de télécommunications, en particulier spatioportée, comprenant un tel dispositif.

Dans le domaine des télécommunications il est parfois nécessaire de combiner entre eux des signaux à radiofréquence issus de sources différentes, par exemple afin de les retransmettre vers un même destinataire, ou simplement au moyen d'une même antenne. Il peut arriver que les spectres de ces signaux se superposent, en partie ou totalement ; dans ce cas, il est nécessaire de procéder à des conversions de fréquence pour éviter que ces signaux n'interfèrent entre eux. En outre des conversions de fréquence peuvent être rendues nécessaires, par exemple, afin de retransmettre sur une liaison descendante des signaux reçus via une liaison montante. Chaque opération de conversion de fréquence nécessite l'utilisation d'un mélangeur à radiofréquence distinct, piloté par un oscillateur local. Lorsque le nombre de signaux à traiter est important, cela peut conduire à la réalisation de dispositifs de brassage et conversion fréquentielle très complexes, et donc couteux, lourds, encombrants et consommateurs de puissance (ces trois derniers paramètres étant particulièrement pénalisants dans les applications spatiales).

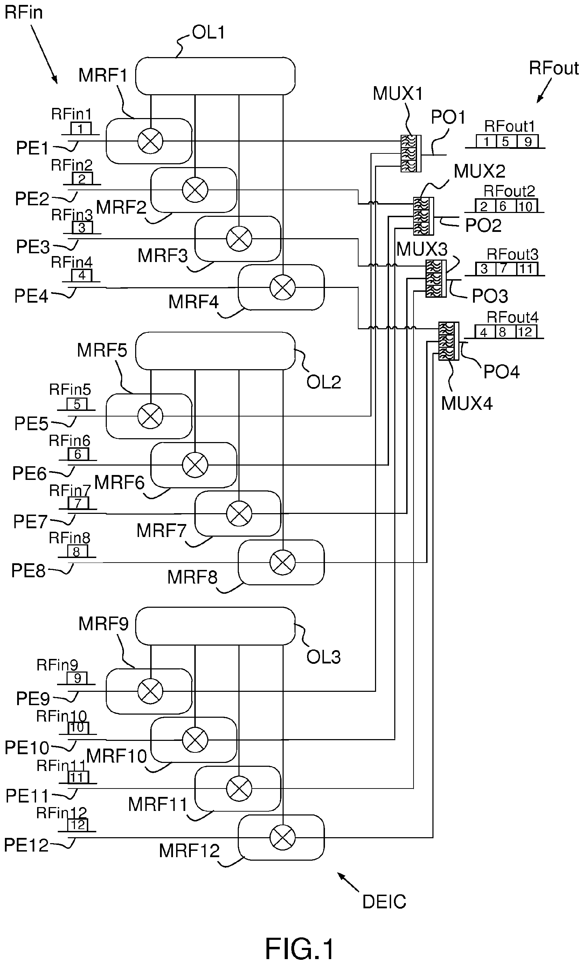

La figure 1 illustre schématiquement la structure et le fonctionnement d'un dispositif de brassage et conversion fréquentielle selon l'art antérieur DEIC. Le dispositif présente douze entrées PE1 - PE12 (le nombre 12 est donnée uniquement à titre d'exemple) pour des signaux à radiofréquences respectifs RFin1 - RFin12, désignés collectivement par la référence RFin. Ces signaux, qu'on suppose présentant tous une même fréquence fs, ou en tout cas des spectres se recouvrant au moins partiellement, sont fournis en entrée à des mélangeurs à radiofréquence respectifs, MRF1 - MRF12, qui reçoivent aussi, sur une autre entrée, des signaux à radiofréquence généré par des oscillateurs locaux OL1 - OL3, opérant à des (radio)fréquences différentes, fOL1, fOL2, fOL3. Plus précisément, les mélangeurs MRF1, MRF2, MRF3 et MRF4 reçoivent sur une première entrée les signaux RFin1, RFin2, RFin3, RFin4, respectivement, et sur une seconde entrée un même signal généré par l'oscillateur local OL1 ; les mélangeurs MRF5, MRF6, MRF7 et MRF8 reçoivent sur une première entrée les signaux RFin5, RFin6, RFin7, RFin8, respectivement, et sur une seconde entrée un même signal généré par l'oscillateur local OL2 ; et les mélangeurs MRF9, MRF10, MRF11 et MRF12 reçoivent sur une première entrée les signaux RFin9, RFin10, RFin11, RFin12, respectivement, et sur une seconde entrée un même signal généré par l'oscillateur local OL3.

D'une manière connue en soi, les signaux à la sortie des mélangeurs MRF1 - MRF4 présentent une composante à une fréquence fs+fOL1 et une autre composante à une fréquence fs-fOL1 ; de même, les signaux à la sortie des mélangeurs MRF5 - MRF8 présentent des composantes aux fréquences fs±fOL2 et ceux à la sortie des mélangeurs MRF9 - MRF12 aux fréquences fs±fOL3.

Quatre multiplexeurs MUX1, MUX2 MUX3 sont ensuite prévus pour combiner trois signaux issus de chacun des trois groupes de mélangeurs: (MRF1 - MRF4), (MRF5 - MRF8), (MRF9 - MRF12). Ces multiplexeurs sont par ailleurs équipés de filtres permettant de rejeter les composantes spectrales à la fréquence différence (fs-fOLi, i=1,2 ou 3) et conserver uniquement celles à la fréquence somme (fs+fOLi, i=1,2 ou 3), ou vice-versa.

Sur les ports de sortie PO1, PO2, PO3, PO4 des multiplexeurs (et du dispositif DEIC) on trouve quatre signaux à radiofréquence « composites » RFout1, RFout2, RFout3, RFout4, constitués chacun par la juxtaposition de trois signaux « élémentaires » obtenus par décalage fréquentiel de trois signaux d'entrée respectifs. Ainsi, le signal de sortie RFout1 regroupe (avec décalage fréquentiel) les signaux RFin1, RFin5 et RFin9 ; le signal de sortie RFout2 regroupe RFin2, RFin6, RFin10 ; le signal de sortie RFout3 regroupe RFin3, RFin7, RFin11 ; et le signal de sortie RFout4 regroupe RFin4, RFin8, RFin12. Les signes de référence 1 à 12 permettent d'associer les signaux d'entrée aux signaux composites de sortie correspondants.

Le principal inconvénient du dispositif DEIC est que, pour traiter N signaux à radiofréquence, il nécessite de N mélangeurs, ce qui peut rapidement conduire à une complexité inacceptable.

L'invention vise à remédier à cet inconvénient.

Conformément à l'invention, ce but est atteint grâce à un traitement photonique des signaux. Concrètement, dans un dispositif selon l'invention, les signaux à radiofréquence en entrée sont transférés sur des porteuses optiques à des longueurs d'ondes différentes. Puis, les signaux qui doivent subir un même décalage fréquentiel peuvent être regroupés et être modulés ensemble, par un même mélangeur optique, tout en gardant leur individualité grâce à la diversité de longueur d'onde de leurs porteuses optiques. Ensuite, les opérations de séparation puis recombinaison sont effectuées par des moyens optiques, et un transfert dans le domaine des radiofréquences n'est effectué qu'à la sortie du dispositif.

Des dispositifs photoniques permettant le traitement de signaux à radiofréquences ont déjà été proposés. Cependant, ces dispositifs connus de l'art antérieur ne permettent pas de mettre en oeuvre les fonctionnalités du dispositif DEIC de la figure 1 et/ou de réduire sa complexité. Par exemple :
- L'article de T. Kuri et al. « Dense Wavelength-Division Multiplexing Millimeter-Wave-Band Radio-on-Fibre Signal Transmission With Photonic Downconversion », Journal of Lightwave Technology, Vol. 21, No. 6, Juin 2003, décrit un système de « radio sur fibre optique » dans lequel des signaux radio multiples sont transférés sur des porteuses optiques à des longueurs d'onde différentes, transportés par des fibres optiques respectives jusqu'à un multiplexeur, ensuite multiplexés dans une même fibre optique et transportés jusqu'à une station centrale éloignée où ils sont convertis en fréquence par un mélangeur électro-optique unique, avant d'être démultiplexés. Dans cet article il n'est pas question d'un dispositif de brassage et recombinaison de signaux impliquant l'utilisation de différentes conversions fréquentielles, mais d'une simple liaison sur une zone géographique étendue. Ainsi, il n'est pas question de réarranger dans les domaines spatial et fréquentiel, de multiples signaux individuels d'entrée en signaux composites de sortie, comme dans le cas de DEIC et de l'invention.
- L'article de P-T Shih et al « WDM up-conversion employing frequency quadrupling in optical modulator », Optics Express, Vol. 17, No. 3, 2 février 2009, décrit également un système de « radio sur fibre optique » dans lequel plusieurs signaux multiplexés en longueur d'onde partagent un même mélangeur électro-optique.
- L'article de M. E. Manka « Microwave Photonics for Electronic Warfare Applications » décrit des systèmes aérotransportés de guerre électronique dans lesquels des signaux à radiofréquence issus d'antennes différentes sont transférés sur des porteuses optiques à des longueurs d'onde différentes, transportés par fibre optique jusqu'à un multiplexeur, multiplexées, converties en fréquence au moyen d'un mélangeur électro-optique unique, avant d'être démultiplexés pour être ensuite traités individuellement. Là encore, il n'est pas question de réarranger des signaux individuels d'entrée et de les regrouper en signaux composites de sortie, comme dans le cas de DEIC et de l'invention.
- Le document US 5,661,582 décrit un dispositif photonique d'interconnexion de signaux à radiofréquence destiné à être utilisé dans une charge utile de télécommunications spatioportée. Le dispositif ne fournit pas, à ses sorties, des signaux composites obtenus par conversion fréquentielle et regroupement des signaux présents à ses entrées. Ainsi, il accomplit des fonctions tout à fait différentes de celles du dispositif DEIC et de l'invention.
- Le document FR 2 864 385 décrit un dispositif photonique de brassage spatio-fréquentiel de signaux à radiofréquence, destiné à être utilisé dans une charge utile de télécommunications spatioportée. Le dispositif utilise des mélangeurs électro-optiques pour effectuer des conversions de fréquence, et un réseau d'interconnexion optique. Contrairement au cas du dispositif DEIC de la figure 1, chaque mélangeur optique est utilisé pour mélanger un seul signal à radiofréquence en entrée avec plusieurs signaux d'oscillateurs locaux simultanément. Ainsi, le dispositif décrit par ce document ne répond pas au même besoin et réalise un traitement différent du dispositif DEIC.

Ainsi, aucun de ces documents ne permet de mettre en oeuvre les fonctionnalités du dispositif DEIC de la figure 1 avec une complexité moindre.

Un objet de l'invention, permettant de résoudre ce problème, est un dispositif photonique de brassage et de conversion fréquentielle de signaux à radiofréquence comprenant :
- une pluralité d'entrées pour des signaux à radiofréquence respectifs ;
- une pluralité de convertisseurs électronique/optique, chaque dit convertisseur étant associé à une dite entrée et étant configuré pour générer un signal optique en transférant un dit signal à radiofréquence sur une porteuse optique à une longueur d'onde respective ;
- au moins un premier ensemble de combineurs optiques, chaque combineur optique dudit premier ensemble étant configuré pour regrouper dans un même chemin optique une pluralité desdits signaux optiques ;
- une pluralité de modulateurs électro-optiques associés à des chemins optiques respectifs, chaque dit modulateur électro-optique étant configuré pour mélanger l'ensemble des signaux optiques se propageant dans le chemin optique correspondant avec une porteuse radiofréquence respective ;
- une pluralité de séparateurs optiques configurés pour séparer les signaux optiques, mélangés par lesdits modulateurs électro-optiques avec leur porteuse radiofréquence respective, se propageant dans chacun desdits chemins optiques ;
- un second ensemble de combineurs optiques, chaque combineur optique dudit second ensemble étant configuré pour regrouper une pluralité de signaux optiques issus de chemins optiques différents ; et
- une pluralité de convertisseurs optique/électronique, chaque dit convertisseur étant associé à un combineur optique dudit second ensemble et étant configuré pour convertir le signal optique composite issu du combineur optique respectif en un signal à radiofréquence de sortie ;
lesdits convertisseurs électronique - optique et combineurs optiques dudit second ensemble étant configurés de telle façon que tous les signaux optiques se propageant selon un même chemin optique, et tous les signaux optiques regroupés par un même combineur optique du second ensemble, présentent des porteuses optiques de longueur d'onde différente.

Selon des modes de réalisation particuliers d'un tel dispositif :
- Chaque dit convertisseur électronique/optique peut être configuré pour générer un dit signal optique en transférant un dit signal à radiofréquence sur une porteuse optique à une dite longueur d'onde différente de celle des autres convertisseurs.
- Le dispositif peut comprendre également une pluralité d'oscillateurs locaux fonctionnant à des radiofréquences différentes et configurés pour piloter des mélangeurs optiques respectifs.
- Au moins certains desdits convertisseurs électronique/optique peuvent être reliés par des commutateurs optiques respectifs à des entrées respectives de plusieurs combineurs optiques dudit premier ensemble, et au moins certaines sorties d'au moins certains séparateurs optiques sont reliés par des commutateurs optiques respectifs à des entrées respectives de plusieurs combineurs optiques dudit second ensemble. Plus particulièrement, tous lesdits convertisseurs électronique/optique peuvent être reliés par des commutateurs optiques respectifs à des entrées respectives de tous les combineurs optiques dudit premier ensemble, et toutes les sorties de tous les séparateurs optiques peuvent être reliés par des commutateurs optiques respectifs à des entrées respectives de tous les combineurs optiques dudit second ensemble.
- Ladite pluralité de séparateurs optiques et ledit second ensemble de combineurs optiques peuvent être réalisés au moyen d'un multiplexeur optique NxN.
- Lesdits convertisseurs électronique - optique peuvent comprendre des lasers à semi-conducteur configurés pour être modulés directement par les signaux à radiofréquence présents aux entrées respectives du dispositif.
- En variante, lesdits convertisseurs électronique - optique peuvent comprendre des lasers à semi-conducteur avec modulateur électro-optique intégré.

Un autre objet de l'invention est une charge utile de télécommunications spatioportée comprenant un tel dispositif photonique de brassage et de conversion fréquentielle de signaux à radiofréquence.

Selon des modes de réalisation particuliers :
- Une telle charge utile peut comprendre une pluralité de canaux de réception pour des signaux à radiofréquence présentant des porteuses à radiofréquence, lesdits canaux de réception étant reliés à des entrées respectives dudit dispositif photonique de brassage et de conversion fréquentielle de signaux à radiofréquence ; et une pluralité de canaux d'émission pour des signaux à radiofréquence présentant des porteuses de fréquences différentes, lesdits canaux d'émission étant reliés à des convertisseurs optique/électronique respectifs dudit dispositif photonique de brassage et de conversion fréquentielle de signaux à radiofréquence.
- Une telle charge utile peut comprendre un processeur numérique de signaux à radiofréquence présentant des sorties pour des signaux à radiofréquence présentant des porteuses de même fréquence, lesdites sorties étant reliées à des entrées respectives dudit dispositif photonique de brassage et de conversion fréquentielle de signaux à radiofréquence ; et une pluralité de canaux d'émission pour des signaux à radiofréquence présentant des porteuses de fréquences différentes, lesdits canaux d'émission étant reliés à des convertisseurs optique/électronique respectifs dudit dispositif photonique de brassage et de conversion fréquentielle de signaux à radiofréquence.

- Une telle charge utile peut comprendre une antenne active apte à fonctionner en réception, présentant des sorties pour des signaux à radiofréquences dans une même bande, lesdites sorties étant reliées à des entrées respectives dudit dispositif photonique de brassage et de conversion fréquentielle de signaux à radiofréquence ; et un processeur en bande de base présentant des entrées reliées à des convertisseurs optique/électronique respectifs dudit dispositif photonique de brassage et de conversion fréquentielle de signaux à radiofréquence.

Le terme « radiofréquence » désigne les fréquences comprises entre 1 MHz et 100 GHz environ - y compris donc les micro-ondes (1 GHz et plus).

Le terme « photonique » désigne les techniques et les dispositifs permettant la génération, transmission, manipulation et détection de « lumière », c'est-à-dire de rayonnement électromagnétique de longueur d'onde comprise entre 200 nm et 3 µm environ.

D'autres caractéristiques, détails et avantages de l'invention ressortiront à la lecture de la description faite en référence aux dessins annexés donnés à titre d'exemple et qui représentent, respectivement :
- la figure 1, déjà décrite, le schéma fonctionnel d'un dispositif de brassage et de conversion fréquentielle de signaux à radiofréquence connu de l'art antérieur, employant uniquement des moyens électroniques ;
- la figure 2, le schéma fonctionnel d'un dispositif photonique de brassage et de conversion fréquentielle de signaux à radiofréquence selon un premier mode de réalisation de l'invention ;
- la figure 3, le schéma fonctionnel d'un dispositif photonique de brassage et de conversion fréquentielle de signaux à radiofréquence selon un deuxième mode de réalisation de l'invention ;
- la figure 4, le schéma fonctionnel d'une charge utile de télécommunications spatioportée selon un troisième mode de réalisation de l'invention ;
- la figure 5, le schéma fonctionnel d'une charge utile de télécommunications spatioportée selon un quatrième mode de réalisation de l'invention ;
- la figure 6a, le schéma fonctionnel d'une charge utile de télécommunications spatioportée selon un cinquième mode de réalisation de l'invention et, la figure 6b, le schéma fonctionnel d'une charge utile de télécommunications spatioportée selon l'art antérieur, employant uniquement des moyens électroniques.

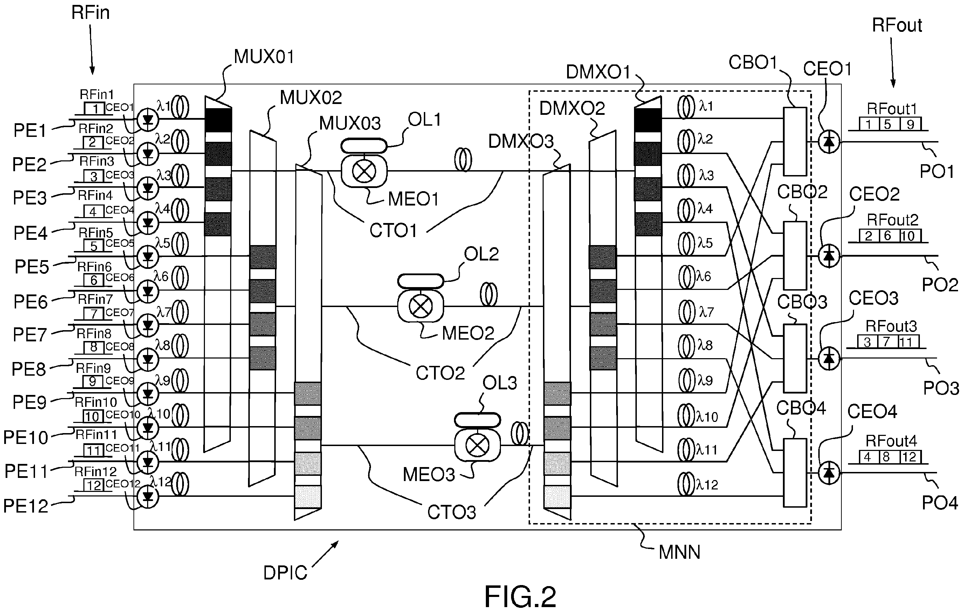

La figure 2 illustre la structure et le fonctionnement d'un dispositif photonique de brassage et conversion fréquentielle DPIC selon un premier mode de réalisation de l'invention.

Comme dans le cas du dispositif DEIC, on considère le cas d'un dispositif recevant à ses entrées des signaux à radiofréquences présentant une même fréquence centrale fₛ ; cela n'est cependant pas essentiel.

Les signaux à radiofréquence RFin1 - Rfin12 présents aux entrées PE1 - PE12 du dispositif sont transférés sur des porteuses optiques respectives à des longueurs d'onde λ₁ - λ₁₂ par des convertisseurs électrique - optique CEO1 - CEO12. Cela signifie que des porteuses optiques aux longueurs d'ondes λ₁ - λ₁₂ sont modulées, par exemple en amplitude, chacune par un signal à radiofréquence respectif ; en d'autres termes, l'enveloppe de chaque signal optique correspond à l'un des signaux à radiofréquence d'entrée. Typiquement, les longueurs d'onde λ₁ - λ₁₂ peuvent se situer dans le proche infrarouge (1200-1600 nm). Les convertisseurs électrique - optique sont généralement des lasers à semi-conducteur, et la modulation des signaux optiques peut être obtenue de manière directe, c'est-à-dire en modulant le courant d'alimentation de ces lasers. Il est également possible d'utiliser des lasers à semi-conducteur avec un modulateur électro-optique intégré).

Les convertisseurs électrique - optique sont reliés à un ensemble de multiplexeurs optiques (dits aussi « dispositifs WDM », où l'acronyme WDM signifie « multiplexage par répartition en longueur d'onde », de l'anglais « Wavelength Division Multiplexing ») par des fibres optiques respectives. Plus précisément, des convertisseurs électrique - optique (CEO1 - CEO4) formant un premier groupe sont reliés à un premier multiplexeur MUXO1 ; des convertisseurs électrique - optique (CEO5 - CEO8) formant un deuxième groupe sont reliés à un deuxième multiplexeur MUXO2 ; et des convertisseurs électrique - optique (CEO9 - CEO12) formant un troisième groupe sont reliés à un troisième multiplexeur MUXO3. Chacun de ces multiplexeurs a une sortie unique, reliée à une fibre optique. Ainsi, les signaux optiques aux longueurs d'onde λ₁, λ₂, λ₃ et λ₄ se propagent le long de la fibre optique CTO1 reliée à la sortie du multiplexeur MUXO1, les signaux optiques aux longueurs d'onde λ₅, λ₆, λ₇ et λ₈ se propagent le long de la fibre optique CTO2 reliée à la sortie du multiplexeur MUXO2, les signaux optiques aux longueurs d'onde λ₉, λ₁₀, λ₁₁ et λ₁₂ se propagent le long de la fibre optique CTO3 reliée à la sortie du multiplexeur MUXO3. Les signaux se propageant le long d'une même fibre optique maintiennent leur individualité grâce au fait qu'ils ont des longueurs d'onde différentes.

Chaque fibre optique CTO1, CTO2, CTO3 amène les signaux optiques issus d'un multiplexeur à une entrée optique d'un mélangeur électro-optique respectif, MEO1, MEO2, MEO3, chacun recevant également, sur une autre entrée RF, un signal à radiofréquence généré par un oscillateur local respectif OL1, OL2, OL3. En général, les signaux générés par ces oscillateurs locaux présentent des fréquences différentes. Avant le mélangeur, chaque signal optique présente une enveloppe correspondant à un signal RFin de fréquence centrale fs ; après le mélangeur, l'enveloppe présente des composantes aux fréquences centrales fs± n * fOLi, avec fOLi=fOL1, fOL2, fOL3 - fréquence de l'oscillateur local associé au mélangeur considéré, le paramètre « n » prenant des valeurs entières. Selon le type de mélangeur, le réglage de son point de fonctionnement et le filtrage en sortie de dispositif, une de ces composantes sera privilégiée.

Dans une configuration préférentielle les mélangeurs sont polarisés à un minimum de transmission optique, ce qui a pour effet de moduler les porteuses optiques au double de la fréquence de l'oscillateur local fOLi, et donc de privilégier les composantes fs ± 2 * fOLi. Un filtrage optique ou RF selon les cas permet ensuite de sélectionner la composante voulue, par exemple fs + 2 * fOLi , et de rejeter celle qui n'est pas désirée en fs - 2 * fOLi (ou vice-versa).

On réalise donc une conversion fréquentielle (et plus précisément une translation ou décalage en fréquence) de tous les signaux. Contrairement au cas du dispositif électronique DEIC, cependant, la conversion est effectuée en utilisant seulement trois mélangeurs, un par oscillateur local. Grâce au multiplexage en longueur d'onde, tous les signaux regroupés pour subir un même décalage de fréquence peuvent partager un même mélangeur.

Les fibres optiques (désignées toujours par les références CTO1, CTO2, CTO3) en sortie des mélangeurs conduisent les signaux optiques modulés vers des démultiplexeurs optiques respectifs DMXO1, DMXO2, DMXO3 qui séparent les signaux de longueur d'onde différente. Ainsi, à la sortie de cet ensemble de démultiplexeurs on retrouve 12 signaux optiques indépendants qui ne diffèrent de ceux générés par les convertisseurs électrique - optique d'entrée CEO1 - CEO12 que par le fait que leurs enveloppes ont subi des décalages en fréquence (car chaque mélangeur génère des composantes décalées en fréquence vers le haut - fs+ n * fOLi - et des composantes décalées vers le bas - fs- n * fOLi).

Ensuite, ces signaux sont regroupés de telle manière que chaque groupe ne contienne que des signaux optiques issus de mélangeurs différents, et donc ayant subi des décalages de fréquence différents. Dans l'exemple de la figure il y a quatre groupe de trois signaux chacun, chaque groupe contenant exactement un signal issu du mélangeur MEO1, un signal issu du mélangeur MEO2 et un signal issu du mélangeur MEO3. Dans cet exemple, en outre, le regroupement est obtenu grâce à un ensemble de combineurs optiques CBO1, CBO2, CBO3.

Les termes « combineur » et « séparateur » sont utilisés de manière générale pour désigner tout dispositif adapté pour combiner/séparer des signaux optiques ; les multiplexeurs et les démultiplexeurs sont donc considérés comme des cas particuliers de combineurs et séparateurs, respectivement.

La recombinaison des signaux peut donc être faite de différentes façons, en utilisant notamment et de manière non exclusive les dispositifs suivants:
- des coupleurs à fibre obtenus par fusion/étirage ; ces composants sont beaucoup plus simples que les multiplexeurs, mais ils présentent des pertes plus élevées et n'assurent pas de fonction de filtrage ;
- des multiplexeurs en longueur d'onde qui optimisent les performances en termes de pertes et de filtrage ;
- des détecteurs à entrées optiques multiples qui comportent un élément permettant de concentrer dans le domaine optique plusieurs faisceaux et d'illuminer un seul photodiode ;e tels composants sont par exemple décrits dans l'article de N. Mothe et P. Di Bin, « Multichannel Microwave Photonics Signais Summation Device », IEEE Photonics Technology Letters, Vol. 23, NO. 3, 1er février, 2011 ;
- des réseaux de détecteurs à onde RF progressive, tels que décrits dans l'article de M. Chtioui et al., « Optical Summation of RF Signais », IEEE Transactions On Microwave Theory And Techniques, Vol. 55, NO. 2, février 2007, et qui reposent sur la distribution de plusieurs photodiodes le long d'une ligne de transmission RF à haute impédance et la construction progressive d'un signal de sortie RF unique.

On notera que les démultiplexeurs DMXO1 - DMXO3 pourraient être remplacés par des simples séparateurs à fibre optique (là aussi, le gain en simplicité est obtenu au prix de pertes plus élevées et de la renonciation à une fonction de filtrage). Il est cependant préférable que chaque signal optique traverse au moins un multiplexeur ou démultiplexeur, pour en assurer la pureté spectrale ; autrement, des filtres optiques devront être prévus à un niveau dans le dispositif entre les mélangeurs et la conversion optique - électrique.

On notera également que la fonctionnalité de séparation et recombinaison des signaux respectivement par des démultiplexeurs et multiplexeurs peut sous certaines conditions être réalisée de manière avantageuse par un seul et même dispositif intégré et passif connu sous le terme de multiplexeur NxN ou routeur en longueur d'onde, comme décrits dans les articles de C. Dragone, « An N x N Optical Multiplexer Using a Planar Arrangement of Two Star Couplers », IEEE Photonics Technology Letters, Vol. 3, NO. 9, septembre 1991, et de H. Takahashi et al., «Transmission Characteristics of Arrayed Waveguide N x N Wavelength Multiplexer », Journal Of Lightwave Technology, Vol. 13, NO. 3, mars 1995. Sur la figure 2, la référence MNN désigne le sous-ensemble de démultiplexeurs DMXO1, DMXO2, DMXO3 et combineurs CBO1, CBO2, CBO3 et CBO4, qui pourrait être remplacé par un dispositif de type multiplexeur NxN (avec N=4, dont seulement trois de ses quatre entrées seraient utilisées), sous certaines conditions d'allocation des longueurs d'onde. Plus particulièrement il est possible d'utiliser, pour les porteuses optiques, N longueurs d'onde qui se répètent avec une permutation circulaire. Dans le cas de la figure 2 on peut donc utiliser un dispositif multiplexer 4x4 avec une allocation de longueurs d'onde de ce type: λ₁≠λ₂≠λ₃≠λ₄ ; λ₅=λ₄ ; λ₆=λ₁ ; λ₇=λ₂ ; λ₈=λ₃ ; λ₉=λ₃ ; λ₁₀=λ₄ ; λ₁₁=λ₁ ; λ₁₂=λ₂.

On notera enfin qu'il est possible d'associer plusieurs de ces moyens pour réaliser la fonction de recombinaison. Par exemple, pour recombiner nxm signaux optiques (n, m entiers) il est possible d'utiliser 'm' coupleurs à fibre à 'n' entrées et une sortie, dont les 'm' sorties sont couplées à des entrées respectives d'un détecteur à entrées optiques multiples.

Les signaux optiques « composites » obtenus à la sortie des combineurs sont convertis dans le domaine des radiofréquences au moyen de convertisseurs optique - électrique COE1, COE2, COE3 (typiquement des photodiodes). Comme dans le cas du dispositif DEIC, on retrouve sur les ports de sortie du dispositif photonique DPIC quatre signaux à radiofréquence « composites » RFout1, RFout2, RFout3, RFout4, constitués chacun par la superposition de trois signaux « élémentaires ». Plus précisément le signal de sortie RFout1 regroupe (avec décalage fréquentiel) les signaux RFin1, RFin5 et RFin9 ; le signal de sortie RFout2 regroupe RFin2, RFin6, RFin10 ; le signal de sortie RFout3 regroupe RFin3, RFin7, RFin11 ; et le signal de sortie RFout4 regroupe RFin4, RFin8, RFin12. Contrairement au cas de DEIC, cependant, ces signaux composites contiennent aussi bien les composantes décalées en fréquence vers le haut que des composantes décalées en fréquence vers le bas. Le filtrage (qui dans DEIC était assuré par les multiplexeurs de sortie) est effectué en aval des ports de sortie de DPIC.

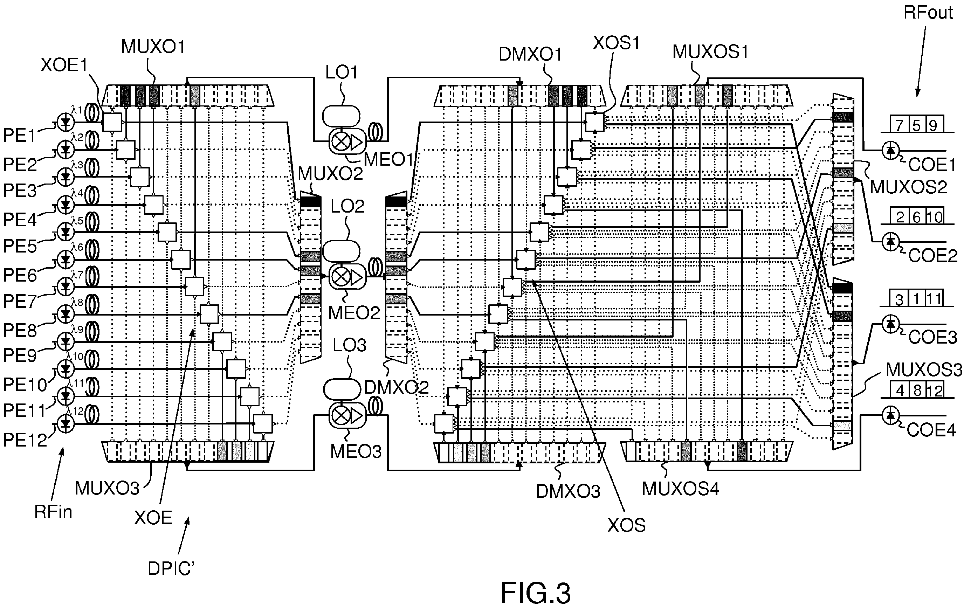

La figure 3 illustre la structure et le fonctionnement d'un dispositif photonique de brassage et conversion fréquentielle DPIC' selon un deuxième mode de réalisation de l'invention. Le dispositif DPIC' se différencie de celui de la figure 2 essentiellement par le fait que
- chaque convertisseur électrique - optique est relié à tous les multiplexeurs MUXO1 - MUXO2 par un commutateur optique à une entrée et trois sorties (la référence XOE désigne de manière générale ces 12 commutateurs ; la référence XOE1 désigne plus spécifiquement le commutateur relié au premier convertisseur électrique - optique ; les autres commutateurs ne sont pas désignés par des références propres pour ne pas surcharger la figure) ; et que
- chaque sortie de chaque démultiplexeur optique est reliée à une entrée de chacun des combineurs optiques de sortie (qui sont ici réalisés par des multiplexeurs MUXOS1, MUXOS2, MUXOS3, MUXOS4) par des commutateurs optiques respectifs à une entrée et quatre sorties (référence générale XOS ; seul le commutateur XOS1 est identifié par un signe de référence propre).

L'utilisation des deux ensembles de commutateurs optiques XOE, XOS permet le routage des signaux de manière indépendante et très flexible : on pourra retrouver sur chacun des ports de sortie n'importe quelle combinaison de trois signaux d'entrée, décalés en fréquence. Dans l'exemple de la figure 3, par exemple, les signaux 1 et 7 ont échangé leurs positions par rapport à la configuration fixe de la figure 2.

Le fait que, dans le dispositif de la figure 3, l'opération de regroupement des signaux optiques soit effectuée par des multiplexeurs plutôt que par des combineurs de type plus simple est sans rapport avec l'utilisation des commutateurs optiques XOE, XOS.

Il est également possible de réaliser un dispositif présentant des capacités de routage plus limité, auquel cas seulement certains des commutateurs XOE, XOS pourraient être présents et/ou ils pourraient présenter moins de sorties qu'il y a de combineurs en aval.

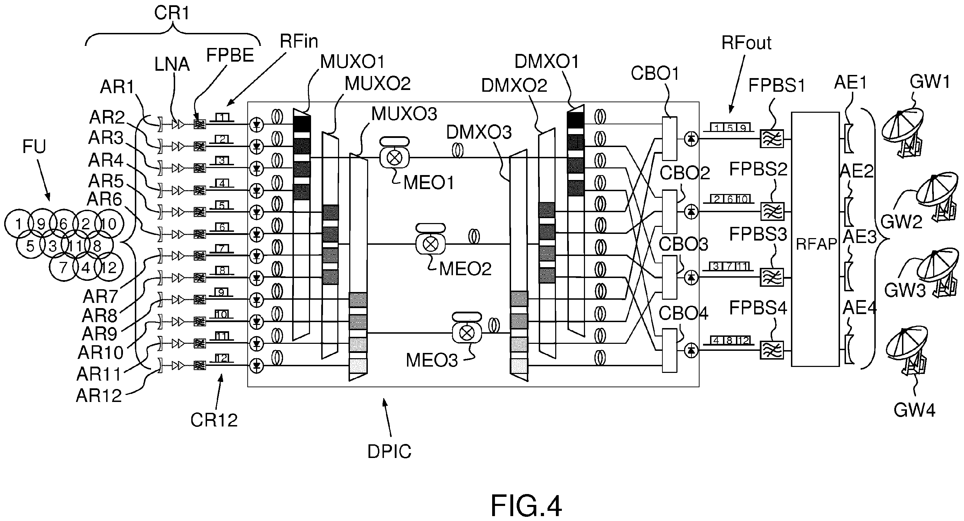

La figure 4 illustre une charge utile spatioportée de télécommunications par satellites utilisant un dispositif DPIC décrit plus haut en référence à la figure 2 (il aurait aussi été possible d'utiliser le dispositif DPIC' de la figure 3). Il s'agit là d'une charge utile à faisceaux multiples mettant en oeuvre une liaison de retour. Dans cette application, 12 faisceaux utilisateurs FU, pouvant éventuellement être à la même fréquence mais séparés spatialement, sont captés par des antennes respectives AR1 - AR12 opérant en réception ; les signaux ainsi acquis sont amplifiés et filtrés (chaque antenne avec un amplificateur à bas bruit et un filtre forme un canal de réception ; seuls le premier et le dernier canal sont identifiés par des signes de référence - CR1 et CR12 - afin de ne pas surcharger la figure). Puis ces signaux sont fournis en entrée au dispositif DPIC. Aux ports de sortie de ce dispositif on récupère quatre signaux composites, regroupant chacun trois signaux d'entrée décalés en fréquence. Ces signaux sont fournis en entrée à des canaux d'émission respectifs (filtres passe-bande FPBS1 - FPBS4 ; amplificateurs de puissance RFAP ; antennes fonctionnant en émission AE1 - AE4) qui assurent leur transmission à des passerelles respectives GW1 - GW4 situées au sol. Dans cette application le décalage fréquentiel a une double fonction : d'une part il permet le regroupement des signaux, d'autre part il est nécessaire car des bandes spectrales différentes sont affectées aux liaisons montantes et aux liaisons descendantes.

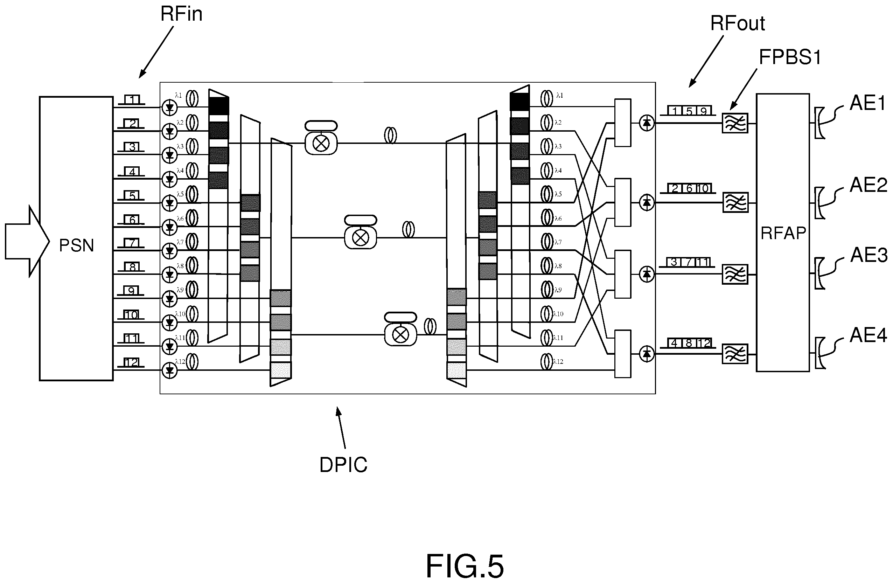

La figure 5 illustre une autre charge utile spatioportée de télécommunications par satellites utilisant un dispositif DPIC décrit plus haut en référence à la figure 2 (là aussi, il aurait été tout à fait possible d'utiliser le dispositif DPIC' de la figure 3). Cette application est semblable à celle de la figure 4, à ceci près que les signaux en entrée ne proviennent pas de canaux d'acquisition mais sont générés, à une fréquence intermédiaire, par un processeur numérique de signaux PSN.

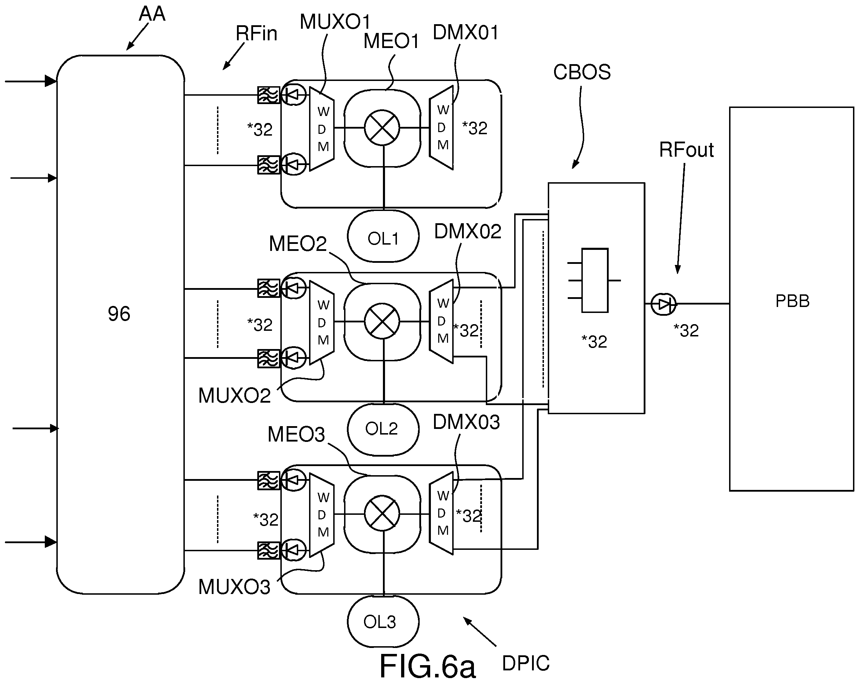

La figure 6a illustre encore une autre charge utile spatioportée de télécommunications par satellites utilisant un dispositif DPIC décrit plus haut en référence à la figure 2 (là aussi, il aurait été tout à fait possible d'utiliser le dispositif DPIC' de la figure 3). L'application considérée dans ce mode de réalisation concerne une antenne active AA, opérant en réception, et présentant 96 ports de sortie. De chacun de ces ports on extrait un signal avec une largeur de bande de 50 MHz et une fréquence centrale comprise entre 1 et 2 GHz. Ces signaux doivent être convertis en bande de base pour être traités par un processeur numérique en bande de base PBB. Un processeur à 96 entrées serait extrêmement complexe et coûteux à réaliser ; par ailleurs, un tel processeur présente généralement une bande plus large que 50 MHz (par exemple de 200 MHz). Il est donc avantageux de regrouper les signaux trois par trois après les avoirs translatés dans la bande 0 - 200 MHz. Ces opérations de conversion fréquentielle et regroupement sont effectuées par un dispositif DPIC semblable à celui de la figure 2, mais utilisant trois mélangeurs électro-optiques opérant chacun sur 32 signaux optiques. La référence CBOS désigne l'ensemble des combineurs optiques.

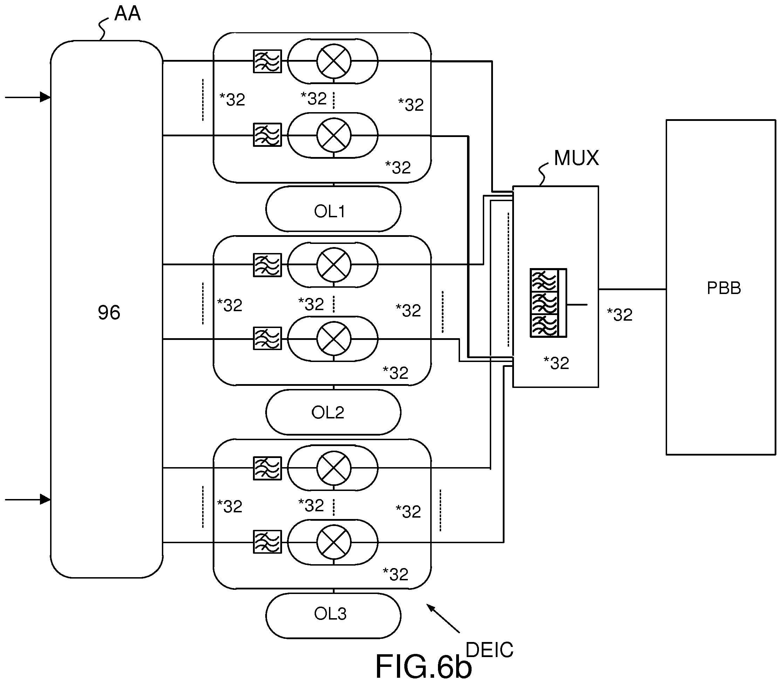

A titre de comparaison, la figure 6b illustre un dispositif DEIC réalisant la même fonctionnalité par voie purement électronique. Il emploie 96 mélangeurs à radiofréquence. On voit donc l'avantage technique et économique procuré par l'invention.

Dans tous les exemples (sauf le dernier) on a considéré le cas de 12 signaux d'entrées, 3 oscillateurs locaux et 4 signaux composites en sortie, comprenant chacun 3 signaux élémentaires. On peut comprendre aisément qu'il s'agit là d'un exemple non limitatif, et que l'invention s'applique à un nombre quelconque de signaux d'entrée et de sortie, et d'oscillateurs locaux. Il n'est d'ailleurs pas nécessaire que tous les signaux composites de sortie comprennent le même nombre de signaux élémentaires.

Par ailleurs, en particulier si on ne nécessite pas une flexibilité de routage des signaux, il n'est pas essentiel que toutes les porteuses optiques présentent des longueurs d'ondes différentes : il est seulement nécessaire que les signaux optiques regroupés par les combineurs du premier et du deuxième ensemble aient des porteuses à des longueurs d'onde différentes. Dans le schéma de la figure 2 cela peut être obtenu, entre autres, avec seulement quatre longueurs d'ondes différentes, en effectuant une permutation circulaire sur chaque groupe de quatre signaux d'entrée. Par exemple, une longueur d'onde λ₁ peut être affectée aux signaux RFin1, RFin6, RFin11 ; une autre longueur d'onde λ₂ aux signaux RFin2, RFin7, RFin12 ; une troisième longueur d'onde λ₃ aux signaux RFin3, RFin8, RFin9 ; et une quatrième longueur d'onde λ₄ aux signaux RFin4, RFin5, RFin10.

L'invention a été décrite en faisant référence à certains modes de réalisation, mais des variantes sont possibles, notamment en ce qui concerne les technologies mises en oeuvre par les différents composants.

Les mélangeurs électro-optiques MEO1 - MEO3 peuvent par exemple être des modulateurs d'intensité du type à Mach-Zehnder et être réalisés en niobate de lithium, ou sur des substrats semiconducteurs comme le phosphure d'indium (InP), l'arseniure de galium (AsGa) ou le silicium. D'autres réalisations sont envisageables. Il n'est même pas nécessaire que les mélangeurs soient basés sur un effet électro-optique (effet Pockels) : en variante on pourrait à titre d'exemple utiliser des modulateurs à électro-absorption, ou des modulateurs en anneau par injection de porteurs. On pourrait également utiliser des modulateurs de phase et des modulateurs de polarisation à condition de placer en sortie des éléments optiques, respectivement des filtres optiques et des polariseurs, qui convertissent les modulations de phase et de polarisation en modulation d'intensité. Tous ces types de mélangeurs peuvent être qualifiés de « électro-optiques », quel que soit leur principe de fonctionnement, car ils permettent de mélanger un signal optique et un signal de nature électrique.

Comme dans FR 2 864 385, il est aussi possible d'utiliser des mélangeurs électro-optiques pour mélanger chaque signal optique avec plusieurs signaux d'oscillateur local à des fréquences différentes. En particulier, on peut utiliser des mélangeurs à double commande RF (dit dual-drive) pour mélanger les signaux optiques avec au moins deux signaux d'oscillateur local différents.

La possibilité d'utiliser des combineurs/séparateurs plus simples que des multiplexeurs/démultiplexeurs a déjà été discutée. On remarquera que la recombinaison des signaux optiques en sortie du dispositif peut être obtenue d'une manière encore plus simple, en couplant directement plusieurs fibres optiques à chaque convertisseur optique - électrique.

Les commutateurs optiques XOE, XOS peuvent être de différents types : électro-mécaniques, micro-opto-électromécaniques (MOEMS), électro-optiques, acousto-optiques, thermo-optiques, à cristaux liquides, etc.

Seuls des modes de réalisation utilisant des fibres optiques pour la transmission de signaux optiques ont été considérés. Toutefois, certaines de ces fibres - voire, au moins en principe, la totalité d'entre elles - peuvent être remplacées par des guides d'ondes planaires dans le cadre d'une réalisation partiellement ou totalement intégrée. Il est même envisageable d'exploiter des trajets de propagation libre. En fait, tout moyen permettant de définir des chemins optiques entre les différents composants du dispositif peut convenir à la mise en oeuvre de l'invention.

Enfin, un dispositif selon l'invention se prête à des applications autres que celle envisagées plus haut, en référence aux figures 4 - 6a. En particulier, l'utilisation du dispositif n'est pas limitée aux applications spatiales.

## Revendications

1. Dispositif photonique de brassage et de conversion fréquentielle de signaux à radiofréquence comprenant :
• une pluralité d'entrées (PE1 - PE12) pour des signaux à radiofréquence (RFin ; RFin1 - RFin12) respectifs ;
• une pluralité de convertisseurs électronique/optique (CEO1 - CEO12), chaque dit convertisseur étant associé à une dite entrée et étant configuré pour générer un signal optique en transférant un dit signal à radiofréquence sur une porteuse optique à une longueur d'onde (λ₁ - λ₁₂) respective ;
• au moins un premier ensemble de combineurs optiques (MUXO1 - MUXO3), chaque combineur optique dudit premier ensemble étant configuré pour regrouper dans un même chemin optique (CTO1 - CTO3) une pluralité desdits signaux optiques ;
• une pluralité de modulateurs électro-optiques (MEO1 - MEO3) associés à des chemins optiques respectifs, chaque dit modulateur électro-optique étant configuré pour mélanger l'ensemble des signaux optiques se propageant dans le chemin optique correspondant avec une porteuse radiofréquence respective ;
• une pluralité de séparateurs optiques (DMXO1 - DMXO3) configurés pour séparer les signaux optiques, mélangés par lesdits modulateurs électro-optiques avec leur porteuse radiofréquence respective, se propageant dans chacun desdits chemins optiques ;
• un second ensemble de combineurs optiques (CBO1 - CBO4 ; MUXOS1 - MUXOS4), chaque combineur optique dudit second ensemble étant configuré pour regrouper une pluralité de signaux optiques issus de chemins optiques différents ; et
• une pluralité de convertisseurs optique/électronique (COE1 - COE4), chaque dit convertisseur étant associé à un combineur optique dudit second ensemble et étant configuré pour convertir le signal optique composite issu du combineur optique respectif en un signal à radiofréquence de sortie (RFout ; RFout1 - RFout4) ;
lesdits convertisseurs électronique - optique et combineurs optiques dudit second ensemble étant configurés de telle façon que tous les signaux optiques se propageant selon un même chemin optique, et tous les signaux optiques regroupés par un même combineur optique du second ensemble, présentent des porteuses optiques de longueur d'onde différente.

2. Dispositif selon la revendication 1 dans lequel chaque dit convertisseur électronique/optique est configuré pour générer un dit signal optique en transférant un dit signal à radiofréquence sur une porteuse optique à une dite longueur d'onde différente de celle des autres convertisseurs.

3. Dispositif selon l'une des revendications précédentes comprenant également une pluralité d'oscillateurs locaux (OL1 - OL3) fonctionnant à des radiofréquences différentes et configurés pour piloter des modulateurs électro-optiques respectifs.

4. Dispositif selon l'une des revendications précédentes dans lequel au moins certains desdits convertisseurs électronique/optique sont reliés par des commutateurs optiques respectifs (XOE ; XOE1 ...) à des entrées respectives de plusieurs combineurs optiques dudit premier ensemble, et au moins certaines sorties d'au moins certains séparateurs optiques sont reliés par des commutateurs optiques respectifs (XOS ; XOS1 ...) à des entrées respectives de plusieurs combineurs optiques dudit second ensemble.

5. Dispositif selon la revendication 4 dans lequel tous lesdits convertisseurs électronique/optique sont reliés par des commutateurs optiques respectifs à des entrées respectives de tous les combineurs optiques dudit premier ensemble, et toutes les sorties de tous les séparateurs optiques sont reliés par des commutateurs optiques respectifs à des entrées respectives de tous les combineurs optiques dudit second ensemble.

6. Dispositif selon l'une des revendications précédentes dans lequel ladite pluralité de séparateurs optiques et ledit second ensemble de combineurs optiques sont réalisés au moyen d'un multiplexeur optique NxN.

7. Dispositif selon l'une des revendications précédentes dans lesquels lesdits convertisseurs électronique - optique comprennent des lasers à semi-conducteur configurés pour être modulés directement par les signaux à radiofréquence présents aux entrées respectives du dispositif.

8. Dispositif selon l'une des revendications 1 à 6 dans lesquels lesdits convertisseurs électronique - optique comprennent des lasers à semi-conducteur avec modulateur électro-optique intégré.

9. Charge utile de télécommunications spatioportée comprenant un dispositif photonique (DPIC, DPIC') de brassage et de conversion fréquentielle de signaux à radiofréquence selon l'une des revendications précédentes.

10. Charge utile selon la revendication 9 comprenant :
- une pluralité de canaux de réception (CR1 - CR12) pour des signaux à radiofréquence présentant des porteuses à radiofréquence, lesdits canaux de réception étant reliés à des entrées respectives dudit dispositif photonique (DPIC) de brassage et de conversion fréquentielle de signaux à radiofréquence ; et
- une pluralité de canaux d'émission (FPBS1 - FPBS4 ; RFAP ; AE1 - AE4) pour des signaux à radiofréquence présentant des porteuses de fréquences différentes, lesdits canaux d'émission étant reliés à des convertisseurs optique/électronique respectifs dudit dispositif photonique de brassage et de conversion fréquentielle de signaux à radiofréquence.

11. Charge utile selon la revendication 9 comprenant :
- un processeur numérique de signaux à radiofréquence (PSN) présentant des sorties pour des signaux à radiofréquence présentant des porteuses de même fréquence, lesdites sorties étant reliées à des entrées respectives dudit dispositif photonique (DPIC) de brassage et de conversion fréquentielle de signaux à radiofréquence ; et
- une pluralité de canaux d'émission (FPBS ; RFAP ; AE1 - AE4) pour des signaux à radiofréquence présentant des porteuses de fréquences différentes, lesdits canaux d'émission étant reliés à des convertisseurs optique/électronique respectifs dudit dispositif photonique de brassage et de conversion fréquentielle de signaux à radiofréquence.

12. Charge utile selon la revendication 9 comprenant :
- une antenne active (AA) apte à fonctionner en réception, présentant des sorties pour des signaux à radiofréquences dans une même bande, lesdites sorties étant reliées à des entrées respectives dudit dispositif photonique (DPIC) de brassage et de conversion fréquentielle de signaux à radiofréquence ; et
- un processeur en bande de base (PBB) présentant des entrées reliées à des convertisseurs optique/électronique respectifs dudit dispositif photonique de brassage et de conversion fréquentielle de signaux à radiofréquence.

## Patentansprüche

1. Photonische Vorrichtung zur Netzwerkbildung und Frequenzumwandlung von Funksignalen, Folgendes beinhaltend:
• eine Vielzahl von Eingängen (PE1 - PE12) für jeweilige Funksignale (RFin; RFin1 - RFin12);
• eine Vielzahl von elektronisch/optischen Umwandlern (CEO1 - CEO12), wobei jeder der Umwandler mit einem der Eingänge verbunden ist und zum Erzeugen eines optischen Signals konfiguriert ist, indem er ein solches Funksignal auf einer optischen Trägerwelle mit einer jeweiligen Wellenlänge (λ1 - λ12) überträgt;
• mindestens eine erste Gruppe von optischen Kombinierern (MUXO1 - MUXO3), wobei jeder optische Kombinierer der ersten Gruppe konfiguriert ist, um in einem gleichen optischen Gang (CTO1 - CTO3) eine Vielzahl der optischen Signale zu gruppieren;
• eine Vielzahl von elektrooptischen Modulatoren (MEO1 - MEO3), verbunden mit jeweiligen optischen Gängen, wobei jeder elektrooptische Modulator konfiguriert ist, um sämtliche optischen Signale, welche sich in dem entsprechenden optischen Gang fortpflanzen, mit einer jeweiligen Funkträgerwelle zu mischen;
• eine Vielzahl von optischen Trennern (DMXO1 - DMXO3), welche konfiguriert sind, um die optischen Signale, welche durch die elektrooptischen Modulatoren mit ihrer jeweiligen Funkträgerwelle gemischt wurden und sich in jedem der optischen Gänge fortpflanzen, zu trennen;
• eine zweite Gruppe von optischen Kombinierern (CBO1 - CBO4 ; MUXOS1 - MUXOS4), wobei jeder optische Kombinierer der zweiten Gruppe konfiguriert ist, um eine Vielzahl von optischen Signalen aus unterschiedlichen optischen Gängen zu gruppieren; und
• eine Vielzahl von elektronisch/optischen Umwandlern (COE1 - COE4), wobei jeder Umwandler mit einem optischen Kombinierer der zweiten Gruppe verbunden und konfiguriert ist, um das zusammengesetzte optische Signal aus dem jeweiligen optischen Kombinierer in ein Funk-Ausgangssignal (RFout; RFout1 - RFout4) zu konvertieren;
wobei die elektronisch/optischen Umwandler und optischen Kombinierer der zweiten Gruppe so konfiguriert sind, dass alle optischen Signale, die sich in einem gleichen optischen Gang fortpflanzen, und alle durch einen gleichen optischen Kombinierer der zweiten Gruppe gruppierten optischen Signale optische Trägerwellen unterschiedlicher Wellenlänge aufweisen.

2. Vorrichtung nach Anspruch 1, bei welcher jeder der elektronisch/optischen Umwandler konfiguriert ist, um ein solches optisches Signal zu erzeugen, indem es ein solches Funksignal auf einer optischen Trägerwelle mit einer Wellenlänge überträgt, welche sich von derjenigen der anderen Umwandler unterscheidet.

3. Vorrichtung nach einem der vorhergehenden Ansprüche, ferner beinhaltend eine Vielzahl von lokalen Oszillatoren (OL1 - OL3), welche mit unterschiedlichen Funkfrequenzen arbeiten und konfiguriert sind, um jeweilige elektrooptische Modulatoren zu steuern.

4. Vorrichtung nach einem der vorhergehenden Ansprüche, bei welcher mindestens einige der elektronisch/optischen Umwandler durch jeweilige optische Schalter (XOE; XOE1 ...) mit jeweiligen Eingängen mehrerer optischer Kombinierer der ersten Gruppe verbunden sind, und mindestens einige Ausgänge mindestens einiger optischer Trenner durch jeweilige optische Schalter (XOS; XOS1...) mit jeweiligen Eingängen mehrerer optischer Kombinierer der zweiten Gruppe verbunden sind.

5. Vorrichtung nach Anspruch 4, bei welcher alle elektronisch/optischen Umwandler durch jeweilige optische Schalter mit jeweiligen Eingängen aller optischen Kombinierer der ersten Gruppe verbunden sind, und alle Ausgänge aller optischen Trenner mit jeweiligen optischen Schaltern mit jeweiligen Eingängen aller optischen Kombinierer der zweiten Gruppe verbunden sind.

6. Vorrichtung nach einem der vorhergehenden Ansprüche, bei welcher die Vielzahl von optischen Trennern und die zweite Gruppe von optischen Kombinierern mit Hilfe eines optischen NxN-Multiplexers geschaffen wird.

7. Vorrichtung nach einem der vorhergehenden Ansprüche, bei welcher die elektronisch/optischen Umwandler Halbleiter-Laser beinhalten, die konfiguriert sind, um direkt durch die Funksignale moduliert zu werden, die an den jeweiligen Eingängen der Vorrichtung anliegen.

8. Vorrichtung nach einem der Ansprüche 1 bis 6, bei welcher die elektronisch/optischen Umwandler Halbleiter-Laser mit integriertem elektrooptischen Modulator beinhalten.

9. Raumgestützte Telekommunikations-Nutzlast, beinhaltend eine photonische Vorrichtung (DPIC, DPIC') zur Netzwerkbildung und Frequenzumwandlung von Funksignalen nach einem der vorhergehenden Ansprüche.

10. Nutzlast nach Anspruch 9, Folgendes beinhaltend:
- eine Vielzahl von Empfangskanälen (CR1 - CR12) für Funksignale, welche Funkträgerwellen aufweisen, wobei die Empfangskanäle mit jeweiligen Eingängen der photonischen Vorrichtung (DPIC) zur Netzwerkbildung und Frequenzumwandlung von Funksignalen verbunden sind; und
- eine Vielzahl von Sendekanälen (FPBS1 - FPBS4; RFAP; AE1 - AE4) für Funksignale, welche Funkträgerwellen unterschiedlicher Frequenz aufweisen, wobei die Sendekanäle mit jeweiligen optisch/elektronischen Umwandlern der photonischen Vorrichtung zur Netzwerkbildung und Frequenzumwandlung von Funksignalen verbunden sind.

11. Nutzlast nach Anspruch 9, Folgendes beinhaltend:
- einen digitalen Funksignalprozessor (PSN) mit Ausgängen für Funksignale mit Trägerwellen gleicher Frequenz, wobei die Ausgänge mit jeweiligen Eingängen der photonischen Vorrichtung (DPIC) zur Netzwerkbildung und Frequenzumwandlung von Funksignalen verbunden sind; und
- eine Vielzahl von Sendekanälen (FPBS; RFAP; AE1 - AE4) für Funksignale, welche Funkträgerwellen unterschiedlicher Frequenz aufweisen, wobei die Sendekanäle mit jeweiligen optisch/elektronischen Umwandlern der photonischen Vorrichtung zur Netzwerkbildung und Frequenzumwandlung von Funksignalen verbunden sind.

12. Nutzlast nach Anspruch 9, Folgendes beinhaltend:
- eine aktive Antenne (AA), geeignet zum Betrieb in Empfang, mit Ausgängen für Funksignale in einem gleichen Frequenzband, wobei die Ausgänge mit jeweiligen Eingängen der photonischen Vorrichtung (DPIC) zur Netzwerkbildung und Frequenzumwandlung von Funksignalen verbunden sind; und
- einen Basisband-Prozessor (PBB) mit Eingängen, welche mit jeweiligen optisch/elektronischen Umwandlern der photonischen Vorrichtung zur Netzwerkbildung und Frequenzumwandlung von Funksignalen verbunden sind.

## Claims

1. A photonic radiofrequency signal cross-connect and frequency conversion device comprising:
• a plurality of inputs (PE1 - PE12) for respective radiofrequency signals (RFin; RFin1 - RFin12);
• a plurality of electronic/optical converters (CEO1 - CEO12), each said converter being associated with one said input and being configured to generate an optical signal by transferring one said radiofrequency signal to an optical carrier at a respective wavelength (λ₁ - λ₁₂);
• at least one first set of optical combiners (MUXO1 - MUXO3), each optical combiner of said first set being configured to group together a plurality of said optical signals in a same optical path (CTO1 - CTO3);
• a plurality of electro-optical modulators (MEO1 - MEO3) associated with respective optical paths, each said electro-optical modulator being configured to mix all of the optical signals being propagated in the corresponding optical path with a respective radiofrequency carrier;
• a plurality of optical splitters (DMXO1 - DMXO3) configured to split the optical signals, mixed by said electro-optical modulators with their respective radiofrequency carrier, being propagated in each of said optical paths;
• a second set of optical combiners (CBO1 - CBO4; MUXOS1 - MUXOS4), each optical combiner of said second set being configured to group together a plurality of optical signals deriving from different optical paths; and
• a plurality of optical/electronic converters (COE1 - COE4), each said converter being associated with an optical combiner of said second set and being configured to convert the composite optical signal deriving from the respective optical combiner into an output radiofrequency signal (RFout; RFout1 - RFout4);
said electronic-optical converters and optical combiners of said second set being configured in such a way that all the optical signals being propagated along a same optical path, and all the optical signals grouped together by a same optical combiner of the second set, have optical carriers of different wavelength.

2. The device according to Claim 1, in which each said electronic/optical converter is configured to generate one said optical signal by transferring one said radiofrequency signal to an optical carrier at one said different wavelength from that of the other converters.

3. The device according to any of the preceding claims, also comprising a plurality of local oscillators (OL1 - OL3) operating at different radiofrequencies and configured to drive respective electro-optical modulators.

4. The device according to any of the preceding claims, in which at least some of said electronic/optical converters are linked by respective optical switches (XOE; XOE1 ...) to respective inputs of several optical combiners of said first set, and at least some outputs of at least some optical splitters are linked by respective optical switches (XOS; XOS1 ...) to respective inputs of several optical combiners of said second set.

5. The device according to Claim 4, in which all said electronic/optical converters are linked by respective optical switches to respective inputs of all the optical combiners of said first set, and all the outputs of all the optical splitters are linked by respective optical switches to respective inputs of all the optical combiners of said second set.

6. The device according to any of the preceding claims, in which said plurality of optical splitters and said second set of optical combiners are implemented by means of an NxN optical multiplexer.

7. The device according to any of the preceding claims, in which said electronic-optical converters comprise semiconductor lasers configured to be modulated directly by the radiofrequency signals present at the respective inputs of the device.

8. The device according to any of Claims 1 to 6, in which said electronic-optical converters comprise semiconductor lasers with integrated electro-optical modulator.

9. A space-borne telecommunications payload comprising a photonic radiofrequency signal cross-connect and frequency conversion device (DPIC, DPIC') according to any of the preceding claims.

10. The payload according to Claim 9, comprising:
• a plurality of reception channels (CR1 - CR12) for radiofrequency signals having radiofrequency carriers, said reception channels being linked to respective inputs of said photonic radiofrequency signal cross-connect and frequency conversion device (DPIC); and
• a plurality of transmission channels (FPBS1 - FPBS4; RFAP; AE1 - AE4) for radiofrequency signals having carriers of different frequencies, said transmission channels being linked to respective optical/electronic converters of said photonic radiofrequency signal cross-connect and frequency conversion device.

11. The payload according to Claim 9, comprising:
• a digital radiofrequency signal processor (PSN) having outputs for radiofrequency signals having carriers of the same frequency, said outputs being linked to respective inputs of said photonic radiofrequency signal cross-connect and frequency conversion device (DPIC); and
• a plurality of transmission channels (FPBS; RFAP; AE1 - AE4) for radiofrequency signals having carriers of different frequencies, said transmission channels being linked to respective optical/electronic converters of said photonic radiofrequency signal cross-connect and frequency conversion device.

12. The payload according to Claim 9, comprising:
• an active antenna (AA) capable of operating in reception mode, having outputs for radiofrequency signals in a same band, said outputs being linked to respective inputs of said photonic radiofrequency signal cross-connect and frequency conversion device (DPIC); and
• a baseband processor (PBB) having inputs linked to respective optical/electronic converters of said photonic radiofrequency signal cross-connect and frequency conversion device.
